(19) Europäisches Patentamt
European Patent Office
Office européen des brevets

(11) Numéro de publication: **0 171 307**
**B1**

(12) # FASCICULE DE BREVET EUROPÉEN

(45) Date de publication du fascicule du brevet: **29.03.89**

(51) Int. Cl.⁴: **C 07 F 17/02**

(21) Numéro de dépôt: **85401316.6**

(22) Date de dépôt: **28.06.85**

(54) **Procédé de fabrication de composés silylmétallocènes et composés obtenus par ce procédé.**

(30) Priorité: **20.07.84 FR 8411506**

(43) Date de publication de la demande:
**12.02.86 Bulletin 86/7**

(45) Mention de la délivrance du brevet:
**29.03.89 Bulletin 89/13**

(84) Etats contractants désignés:
**BE CH DE FR GB IT LI LU NL SE**

(56) Documents cité:
**CHEMICAL ABSTRACTS, vol. 73, no. 19, 9 novembre 1970, page 384, no. 99038k, Columbus, Ohio, US; S.M. MASSARSKAYA et al.: "Preparation of some silicon-containing ferrocene derivatives by hydrosilylation" & TR. MOSK. KHIM.-TEKHNOL. INST. 1969, no. 61, 170-4. From REF. ZH., KHIM. 1970, ABSTR. no. 2ZH488**
**CHEMICAL ABSTRACTS, vol. 83, no. 1, 7 juillet 1975, page 872, no. 10351t, Columbus, Ohio, US; I.M. GVERDTSITELI et al.: "Production of ferrocene- and silicon-containing derivatives of the acetylene series" & ZH. OBSHCH. KHIM. 1975, 45(3), 577-9**

(73) Titulaire: **SOCIETE NATIONALE DES POUDRES ET EXPLOSIFS, 12, quai Henri IV, F-75181 Paris Cédex 04 (FR)**

(72) Inventeur: **Gautier, Jean- Claude, 1, rue Brossolette, F-94480 Ablon sur Seine (FR)**
Inventeur: **Raynal, Serge, Orée de Sénart Bâtiment Hérédia, F-91210 Draveil (FR)**

**EP 0 171 307 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

**Description**

La présente invention concerne un procédé de fabrication de composés silylmétallocènes, et des composés obtenus par ce procédé.

L'invention se rapporte plus particulièrement à un procédé de synthèse par hydrosilylation d'un composé métallocène comprenant au moins un substituant constitué par un radical silylidène.

Les composés métallocènes, comme le fer dicyclopentadiènyle, appelé ferrocène, sont connus et utilisés dans diverses applications telles que, par exemple, comme catalyseur de combustion, antioxydant.

Il a été trouvé que leurs propriétés sont améliorées par l'addition de radicaux organosilylés directement liés au noyau cyclopentadiènyle du métallocène par des liaisons carbone-silicium. De tels composés sont décrits, notamment dans les brevets française 1 396 273, 1 456 277, 1 398 255, 1 396 272 et dans les articles du Chemical Abstracts CA 73 (1970), 99038 K, MASSARSKAYA et CA 83 (1975), 10351 t, GVERDTSITELI.

Pour synthétiser ces produits, il a déjà été proposé plusieurs procédés, notamment décrits dans les brevets français ci-dessus mentionnés. Ainsi, le brevet français 1 398 255 décrit un procédé d'obtention d'un organosilylmétallocène mettant en oeuvre une reaction d'acylation du métallocène par un halogénure d'acide silylcarboxylique, le groupement carbonyle étant ensuite réduit en radical méthylène. Le brevet français n° 1 456 277 décrit également un procédé utilisant des magnésiens pour obtenir des silylmétallocènes. Pour cela, on fait réagir le réactif de Grignard d'un halogénoarylmétallocène sur un halogénure, le réactif de Grignard d'halogénoarylmétallocène étant obtenu soit par le procédé décrit par William F. Little et al, journal of Organic Chemistry, vol 20, p. 213 de mars 1964, soit par le mode opératoire de Victor Weinmayer, Journal American Chemical Society, 77, 3012 (1955).

Ces procédés connus permettent de synthétiser le silylmétallocène avec des rendements faibles, environ 20 % pour la réaction d'acylation et 10 % pour le procédé avec magnésien.

De plus, les produits de départ utilisés dans ces deux synthèses ne sont pas disponibles sur le marché; il est donc nécessaire, avant même de synthétiser le silylmétallocène, de fabriquer l'halogénure d'acide silylcarboxylique ou le réactif de Grignard d'un halogénoarylmétallocène, ce qui diminue encore le rendement global de la réaction et augmente le prix de revient du silylmétallocène.

La présente invention a pour but de remédier à ces inconvénients en proposant un procédé de fabrication d'un composé silylmétallocène mettant en oeuvre des produits de départ disponibles dans le commerce, et des réactions subséquentes ayant un rendement global élevé.

A cet effet, l'invention propose un procédé de fabrication d'un composé silylmétallocène comportant au moins un radical métallocène et au moins un radical silylidène, consistant:

- à faire réagir en présence d'un catalyseur d'hydrosilylation, un métallocène de formule générale (I) suivante.

$$(C_5H_y)\ M\ (C_5H_4)\ (-R_1-\underset{\displaystyle R_5}{\underset{|}{C}}=CH_2)_n \qquad (I)$$

dans laquelle:

- M est un métal de transition compris dans le groupe comportant le fer, l'osmium, le ruthénium, le nickel, le cobalt, le manganèse ou le titane;
- $R_1$ qui peut ne pas être présent, représente un radical aliphatique en $C_1$ à $C_{10}$ ou un radical alkényle carbonyle comportant au maximum 10 atomes de carbone;
- $R_5$ représente l'hydrogène, ou un radical aliphatique;
- n est égal à 1 ou 2; y est égal à 5 -(n-1);

avec un halogénohydrosilane de formule générale (II) suivante:

$$X-\overset{\displaystyle R_2}{\overset{|}{\underset{\displaystyle R_3}{\underset{|}{Si}}}}-H \qquad (II)$$

dans laquelle:

- X représente un halogène choisi dans le groupe constitué par le chlore, le brome ou l'iode;
- $R_2$, $R_3$ qui peuvent être identiques ou différents représentent l'hydrogène ou un radical aliphatique.
- à réduire le produit résultant pour former le composé silylmétallocène et à extraire ledit composé du milieu réactionnel.

Le composé silylmétallocène obtenu par le procédé de l'invention a l'une des formules générales suivantes (III, IV):

$$(C_5H_y)\, M\, (C_5H_4)\, (-R_1' - \underset{\displaystyle R_5}{\underset{|}{CH}} - CH_2 - \overset{\displaystyle R_2}{\overset{|}{\underset{\displaystyle R_3}{\underset{|}{Si}}}} - H)_n \qquad (III)$$

$$[(C_5H_5)\, M\, (C_5H_4)\, R_1' - \underset{\displaystyle R_5}{\underset{|}{CH}} - CH_2)]_m - \overset{\displaystyle H}{\overset{|}{Si}} - (R_4)_{3-m} \qquad (IV)$$

y, n, $R_2$, $R_3$ ayant les significations indiquées ci-dessus;
$R_4$ ayant la signification de $R_2$ ou $R_3$;
$R_1'$ est une chaîne aliphatique saturée, ramifiée ou non, obtenue par hydrogénation du radical représenté par $R_1$ dans la formule I, m est égal à 1, 2, ou 3;
et à extraire ledit composé du milieu réactionnel.

Selon une autre caractéristique de l'invention, le métallocène de formule I et l'halogénosilane de formule II sont additionnés dans un solvant commun.

Les solvants convenant particulièrement à l'invention sont le benzène, le toluène, le tétrahydrofuranne ou un mélange de ceux-ci.

Bien entendu, l'invention n'est pas limitée aux solvants indiqués ci-dessus. C'est ainsi, que les composés dans lesquels sont solubles le métallocène, et l'halogénosilane, peuvent être utilisés comme solvants convenables pour l'invention.

Selon une autre caractéristique de l'invention, la réaction de réduction du radical silyle et des groupes carbonyles s'ils existent, est conduite dans le même solvant gue celui utilisé pour la réaction d'hydrosilylation, et avantageusement dans le milieu réactionnel résultant de cette dernière réaction.

Selon encore une autre caractéristique de l'invention, la réaction d'hydrosilylation est réalisée en milieu hétérogène, sans solvant, la réaction subséquente de réduction étant alors conduite, de préférence, dans un solvant éthéré.

La réaction d'hydrosilylation est réalisée en présence d'un catalyseur d'hydrosilylation choisi dans le groupe comprenant $H_2PtCl_6$, le platine, des sels de nickel ou de cobalt. L'acide hexachloroplatinique est le catalyseur préféré. La température de réaction est comprise entre -5°C environ et 90°C environ. Cette température est déterminée par la température d'ébullition du solvant choisi.

Avantageusement, l'halogénosilane de formule II est ajouté en excès par rapport à la quantité stoechiométrique, de manière à avoir un rapport entre les nombres de liaisons Si-H de l'halogénosilane et le nombre de liaisons vinyliques portées par le métallocène de formule I, égal au moins à 2.

La réaction de réduction est également réalisée en présence d'un catalyseur d'hydrogénation, tel que, par exemple, $LiAlH_4$.

L'extraction du composé silylmétallocène synthétisé est effectuée par toutes méthodes appropriées, telle que l'évaporation, la distillation, l'extraction par solvant ou analogue.

De préférence, le silylmétallocène est extrait du milieu réactionnel par un solvant, celui-ci étant ensuite évaporé.

Dans le mode de réalisation préféré de l'invention, les radicaux $R_2$, $R_3$, $R_4$ des formules générales III, IV sont des radicaux méthyl ou éthyl, tandis que le radical $R_1'$, s'il existe, est une chaîne méthylénique contenant de 1 à 10 atomes de carbone.

Le métallocène préféré de l'invention est le ferrocène de formule

$[(C_5H_5)Fe(C_5H_4-)-]$

représenté ci-dessous par le symbole Fc.

Les exemples ci-dessous, donnés uniquement à titre indicatif, illustrent plus clairement l'invention.

**Exemple 1**

Synthèse du diméthylsilyldiméthylène-ferrocène:

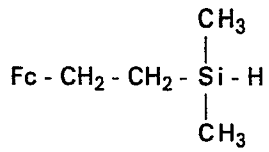

On introduit sous atmosphère d'azote 75 mg de $H_2PtCl_6$, $6H_2O$ dans 12 g de diméthylchlorosilane. Le mélange est chauffé à reflux jusqu'à dissolution complète de l'acide hexachloroplatinique.

On ajoute, dans le milieu réactionnel, une solution de 12,72 g de vinyl-ferrocène dans 45 ml de benzène, la température du milieu réactionnel étant inférieure à 38°C.

Le rapport des liaisons Si-H aux liaisons vinyliques est égal à 2,08.

Le mélange réactionnel est maintenu à une température de 34°C sous agitation pendant 5 heures.

On évapore ensuite l'excès de diméthylchlorosilane et le benzène.

Le résidu est dissous dans de l'éther anhydre et ajouté lentement sur une suspension de $LiAlH_4$ dans de l'éther anhydre chauffé à reflux. Le chauffage est maintenu pendant 48 heures. Après refroidissement, l'excès d'hydrure d'aluminium-lithium est hydrolysé par de l'éther saturé d'eau, puis de l'eau.

On extrait alors le silylferrocène du milieu réactionnel par l'éther. Après séchage et évaporation du solvant, on recueille un résidu liquide brun qui est analysé par chromatographie sur colonne.

On obtient ainsi 12 g de

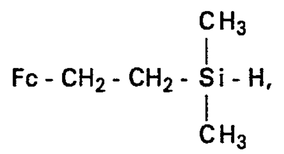

soit un rendement pondéral de 74 % par rapport au vinyl-ferrocène engagé.

**Exemple 2**

Synthèse du diméthylsilyltétraméthylène-ferrocène:

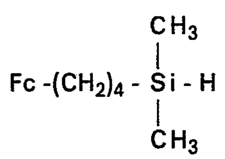

On opère selon le même mode opératoire que précedemment, mais en prenant comme composé ferrocénique de départ le butanyl-4 ferrocène. On obtient le diméthylsilyltétraméthylène-ferrocène avec un rendement pondéral de 50 %.

**Exemple 3**

Synthèse du diméthylsilylisopropyl-ferrocène:

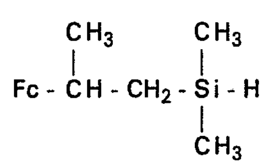

On opère également selon le mode opératoire de l'exemple 1 à l'exception que le vinyl ferrocène est remplacé par le méthyl-1 vinyl-ferrocène.

On obtient également un produit liquide brun.

**Exemple 4**

On réalise le mode opératoire de l'exemple 1, à la différence que l'on ajoute à la place du vinyl-ferrocène, le butadiényl 1-3 ferrocène.

On obtient alors un mélange de deux silyl-ferrocènes:

- le diméthylsilyltétraméthylène-ferrocène,
- le diméthylsilyl-2, ferrocène-1 butane.

Le rendement global de la réaction est de l'ordre de 20 % dans cet exemple.

**Exemple 5**

On prépare tout d'abord le composé

$$Fc - \underset{\underset{O}{\|}}{C} - (CH_2)_8 - CH = CH_2$$

en mettant en réaction, dans du dichlorométhylène et en présence de $AlCl_3$, un ferrocène et le chlorure d'acide

$$Cl - \underset{\underset{O}{\|}}{C} - (CH_2)_8 - CH = CH_2.$$

On extrait après hydrolyse d'$AlCl_3$, le composé

$$Fc - \underset{\underset{O}{\|}}{C} - (CH_2)_8 - CH = CH_2$$

que l'on fait réagir avec le diméthylchlorosilane, selon le mode opératoire décrit dans l'exemple 1.

On obtient le diméthylsilylundécaméthylène-ferrocène.

Les différents produits synthétisés ont été identifiés par analyse infrarouge, et plus particulièrement la liaison Si - H a été caractérisée.

Les exemples donnés ci-dessus montrent l'application générale du procédé de l'invention pour tous les composés métallocéniques comprenant un substituant avec une double liaison.

Les silylmétallocènes produits par le procédé de l'invention ont de nombreuses applications qui sont décrites, par exemple, dans le brevet français n° 1 396 273 du 27 mai 1964. Ainsi, ils peuvent être employés à la fabrication de polymères, à l'élimination des fumées, à l'accélération de la vulcanisation des caoutchoucs, comme adjuvants aux combustibles pour Diesel, comme catalyseurs de combustion, par exemple.

**Revendications**

1. Procédé de fabrication d'un composé silylmétallocène comportant au moins un radical métallocène et au moins un radical silylidène, caractérisé en ce qu'il consiste à faire réagir en présence d'un catalyseur d'hydrosilylation,

un métallocène de formule générale (I) suivante:

$$(C_5H_y)\ M\ (C_5H_4)\ (-R_1-\underset{\underset{R_5}{|}}{C}=CH_2)_n \qquad (I)$$

dans laquelle:

- M est un métal de transition compris dans le groupe comportant le fer, l'osmium, le ruthénium, le nickel, le cobalt, le manganèse ou le titane;
- $R_1$ qui peut ne pas être présent, représente un radical aliphatique en $C_1$ à $C_{10}$ comportant ou non une insaturation éthylénique ou un radical alkényle carbonyle comportant au maximum 10 atomes de carbone;
- $R_5$ représente l'hydrogène, ou un radical aliphatique;
- n est égal à 1 ou 2, y est égal à 5-(n-1)

avec un halogénohydrosilane de formule générale (II) suivante:

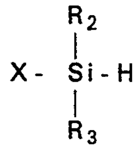

(II)

dans laquelle:

- X représente un halogène choisi dans le groupe constitué par le chlore, le brome ou l'iode
- $R_2$, $R_3$ qui peuvent être identiques ou différents représentent l'hydrogène, un radical aliphatique

puis à réduire le produit résultant pour former ledit composé métallocène ayant l'une des formules générales suivantes (III, IV):

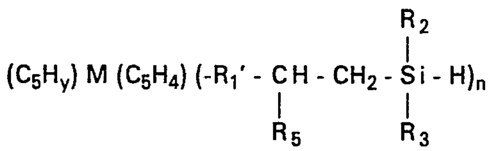

(III)

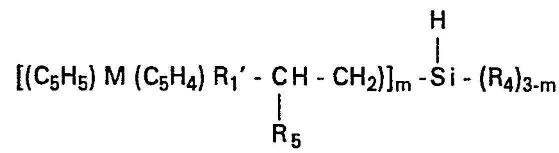

(IV)

dans lesquelles:

y, n, $R_2$, $R_3$ ont les significations indiquées ci-dessus,

$R_4$ a la signification de $R_2$ ou $R_3$,

$R_1'$ est une chaîne aliphatique saturée ramifiée ou non, obtenue par hydrogénation du radical représenté par $R_1$ dans la formule I,

m est égal à 1, 2 ou 3,

et à extraire ledit composé du milieu réactionnel.

2. Procédé selon la revendication 1, caractérisé en ce que l'halogénohydrosilane et le métallocène précités sont additionnés dans un solvant commun, choisi dans le groupe comportant le benzène, le toluène, le tétrahydrofuranne ou un mélange de ceux-ci.

3. Procédé selon la revendication 2, caractérisé en ce que la réaction de réduction précitée du produit résultant précité est réalisée dans le solvant précité utilisé pour la réaction d'hydrosilylation.

4. Procédé selon la revendication 1, caractérisé en ce que la réaction d'hydrosilylation précitée est réalisée en milieu hétérogène.

5. Procédé selon la revendication 2 ou 4, caractérisé en ce que la réaction de réduction est réalisée dans un solvant éthéré.

6. Procédé selon l'une des revendications précédentes, caractérisé en ce que la réaction d'hydrosilylation est réalisée à une température comprise entre - 5° C et + 90° C.

7. Procédé selon l'une des revendications précédentes, caractérisé en ce que l'halogénohydrosilane est ajouté en excès pour avoir un rapport entre les liaisons Si-H de l'organosilane et les liaisons vinyliques portées par le métallocène égal au moins à 2.

8. Procédé selon l'une des revendications précédentes caractérisé en ce que l'halogénohydrosilane précité est le diméthylchlorosilane.

9. Procédé selon l'une des revendications précédentes caractérisé en ce que le métallocène précité est un vinylalkényl-ferrocène.

## Patentansprüche

1. Verfahren zur Herstellung eines Silylmetallocens mit mindestens einem Metallocenrest und mindestens einem Silylidenrest,

gekennzeichnet durch

- Umsetzung in Gegenwart eines Hydrosilylierungskatalysators eines Metallocens der folgenden Formel (I)

$$(C_5H_y)\,M\,(C_5H_4)\,(-R_1-\underset{\displaystyle R_5}{\underset{|}{C}}=CH_2)_n \qquad (I)$$

wobei bedeuten:

M ein Übergangsmetall, ausgewählt unter Eisen, Osmium, Ruthenium, Nickel, Kobalt, Mangan oder Titan,

$R_1$, das auch nicht vorhanden sein kann, einen aliphatischen Rest mit 1 bis 10 Kohlenstoffatomen und ggfs. einer ethylenisch-ungesättigten Bindung oder einen Alkenylcarbonylrest mit höchstens 10 Kohlenstoffatomen,

$R_5$ Wasserstoff oder einen aliphatischen Rest,

n 1 oder 2

und

y 5-(n-1),

mit einem Halogenhydrosilan der folgenden allgemeinen Formel (II)

$$X-\overset{\displaystyle R_2}{\overset{|}{\underset{\displaystyle R_3}{\underset{|}{Si}}}}-H \qquad (II),$$

wobei bedeuten:

X ein Halogen, ausgewählt unter Chlor, Brom oder Jod,

$R_2$ und $R_3$, gleich oder verschieden, Wasserstoff oder einen aliphatischen Rest,

Reduktion des entstandenen Produkts zu einem Metallocen einer der folgenden allgemeinen Formeln (III) und (IV)

$$(C_5H_y)\,M\,(C_5H_4)\,(-R_1'-\underset{\displaystyle R_5}{\underset{|}{C}}H-CH_2-\overset{\displaystyle R_2}{\overset{|}{\underset{\displaystyle R_3}{\underset{|}{Si}}}}-H)_n \qquad (III)$$

$$[(C_5H_5)\,M\,(C_5H_4)\,R_1'-\underset{\displaystyle R_5}{\underset{|}{C}}H-CH_2)]_m-\overset{\displaystyle H}{\overset{|}{Si}}-(R_4)_{3-m} \qquad (IV)$$

in denen

y, n, $R_2$ und $R_3$ die oben angegebene Bedeutung haben,

$R_4$ die Bedeutung von $R_2$ oder $R_3$ hat,

$R_1'$ eine ggfs. verzweigte gesättigte aliphatische Kette ist, die durch Hydrierung des Restes $R_1$ der Formel (I) erhalten wird,

m 1, 2 oder 3,

und

- Extraktion der Verbindung aus dem Reaktionsmedium.

2. Verfahren nach Anspruch 1, dadurch gekennzeichnet, daß das Halogenhydrosilan und das Metallocen mit einem gemeinsammen Lösungsmittel ausgewählt unter Benzol, Toluol, Tetrahydrofuran oder einem Gemisch dieser Verbindungen, versetzt werden.

3. Verfahren nach Anspruch 2, dadurch gekennzeichnet, daß die Reduktion des entstandenen Produkts in dem für die Hydrosilylierung verwendenden Lösungsmittel durchgeführt wird.

4. Verfahren nach Anspruch 1, dadurch gekennzeichnet, daß die Hydrosilylierung in einem heterogenen Medium durchgeführt wird.

5. Verfahren nach Anspruch 2 oder 4, dadurch gekennzeichnet, daß die Reduktion in einem Ether als Lösungsmittel durchgeführt wird.

6. Verfahren nach einem der vorstehenden Ansprüche, dadurch gekennzeichnet, daß die Hydrosilylierung bei einer Temperatur von -5 bis +90°C durchgeführt wird.

7. Verfahren nach einem der vorstehenden Ansprüche, dadurch gekennzeichnet, daß das Halogenhydrosilan in einem solchen Überschuß zugegeben wird, daß das Verhältnis von Si-H-Bindungen des Organosilans und der Vinylbindungen am Metallocen mindestens 2 beträgt.

8. Verfahren nach einem der vorstehenden Ansprüche, dadurch gekennzeichnet, daß als Halogenhydrosilan Dimethylchlorsilan verwendet wird.

9. Verfahren nach einem der vorstehenden Ansprüche, dadurch gekennzeichnet, daß als Metallocen ein Vinylalkenylferrocen hergestellt wird.

**Claims**

1. Process for the manufacture of a silylmetallocene compound containing at least one metallocene radical and at least one silylidene radical, characterized in that it consists in reacting, in the presence of a hydrosilylation catalyst:

a metallocene of the following general formula (I):

$$(C_5H_y)\ M\ (C_5H_4)\ (-R_1-\underset{\displaystyle R_5}{\underset{|}{C}}=CH_2)_n \qquad (I)$$

in which:

- M is a transition metal included within the group comprising iron, osmium, ruthenium, nickel, cobalt, manganese and titanium,
- $R_1$, which may be absent, denotes a $C_1$-$C_{10}$ aliphatic radical comprising or not comprising an ethylenic unsaturation or an alkenylcarbonyl radical containing at most 10 carbon atoms,
- $R_5$ denotes hydrogen or an aliphatic radical,
- n is equal to 1 or 2, y is equal to 5-(n-1)

with a halohydrosilane of the following general formula (II):

$$X-\overset{\displaystyle R_2}{\overset{|}{\underset{\displaystyle R_3}{\underset{|}{Si}}}}-H \qquad (II)$$

in which:

- X denotes a halogen chosen within the group consisting of chlorine, bromine or iodine
- $R_2$ and $R_3$, which may be identical or different, denote hydrogen or an aliphatic radical in then reducing the resultant product to form the said metallocene compound having one of the following general formulae (III, IV):

$$(C_5H_y)\ M\ (C_5H_4)\ (R_1'-\underset{\displaystyle R_5}{\underset{|}{C}H}-CH_2-\overset{\displaystyle R_2}{\overset{|}{\underset{\displaystyle R_3}{\underset{|}{Si}}}}-H)_n \qquad (III)$$

$$[(C_5H_5)\ M\ (C_5H_4)\ R_1'-\underset{\displaystyle R_5}{\underset{|}{C}H}-CH_2)]_m-\overset{\displaystyle H}{\overset{|}{Si}}-(R_4)_{3-m} \qquad (IV)$$

in which:

y, n, $R_2$ and $R_3$ have the meanings shown above,

$R_4$ has the meaning of $R_2$ or $R_3$,

$R_1'$ is a branched or unbranched saturated aliphatic chain obtained by hydrogenation of the radical denoted by $R_1$ in formula I,

m is equal to 1, 2 or 3,

and in extracting the said compound from the reaction mixture.

2. Process according to Claim 1, characterized in that the abovementioned halohydrosilane and metallocene are added in a common solvent chosen within the group comprising benzene, toluene, tetrahydrofuran or a mixture thereof.

3. Process according to Claim 2, characterized in that the abovementioned reduction reaction of the abovementioned resultant product is performed in the abovementioned solvent employed for the hydrosilylation reaction.

4. Process according to Claim 1, characterized in that the abovementioned hydrosilylation reaction is performed in a heterogeneous medium.

5. Process according to Claim 2 or 4, characterized in that the reduction reaction is performed in an ethereal solvent.

6. Process according to one of the preceding Claims, characterized in that the hydrosilylation reaction is performed at a temperature of between -5°C and +90°C.

7. Process according to one of the preceding Claims, characterized in that the halohydrosilane is added in excess to have a ratio between the Si-H bonds of the organosilane and the vinyl bonds carried by the

metallocene equal to at least 2.

8. Process according to one of the preceding Claims, characterized in that the abovementioned halohydrosilane is dimethylchlorosilane.

9. Process according to one of the preceding Claims, characterized in that the abovementioned metallocene is a vinylalkenylferrocene.